# EUROPÄISCHE PATENTSCHRIFT

(11) **EP 2 342 044 B1**
(45) Veröffentlichungstag und Bekanntmachung des Hinweises auf die Patenterteilung: **05.09.2012**
(21) Anmeldenummer: 09783349.5
(22) Anmeldetag: 24.09.2009
(51) Int. Cl.: B23Q 1/00

(54) **BEARBEITUNGSZENTRUM MIT DREHÜBERTRAGER FÜR ELEKTRISCHE ENERGIE**
MACHINING CENTER HAVING ROTARY TRANSMITTER FOR ELECTRIC ENERGY
CENTRE D'USINAGE AVEC DISPOSITIF DE TRANSMISSION ROTATIF D'ÉNERGIE ÉLECTRIQUE

(30) Priorität: 05.11.2008 DE 102008055971
(43) Veröffentlichungstag der Anmeldung: 13.07.2011
(73) Patentinhaber: Komet Group GmbH, 74354 Besigheim (DE)
(72) Erfinder: FRONIUS, Jürgen, 74399 Walheim/Neckar (DE); BIERL, Wolfgang, 74363 Güglingen (DE); GRAF, Heiko, 70839 Gerlingen (DE); HASSELKUSS, Ewald, 70734 Fellbach (DE); HÖRL, Roland, 74357 Bönnigheim (DE); STOLZ, Gerhard, 74379 Ingersheim (DE)
(74) Vertreter: Wolf, Eckhard
(86) Internationale Anmeldenummer: PCT/EP2009/062350
(87) Internationale Veröffentlichungsnummer: WO 2010/052063

(56) Entgegenhaltungen:
- EP-A- 0 719 199
- WO-A-03/089188
- SU-A1- 1 403 113

## Beschreibung

Die Erfindung betrifft ein Bearbeitungszentrum mit einem Maschinengestell, mit einer am Maschinengestell drehbar angeordneten, motorisch angetriebenen, eine Aufnahme für ein Werkzeug aufnehmenden Maschinenspindel, mit einer Gruppe von an der Maschinenspindel einwechselbaren Maschinenwerkzeugen, die ein mit der Aufnahme der Maschinenspindel kompatibles Kupplungselement aufweisen, und mit einem Drehübertrager für elektrische Energie, der einen maschinengestellfesten Stator und einen mit der Maschinenspindel mitdrehenden Rotor aufweist.

Bearbeitungszentren dieser Art werden zu vielfältigen fertigungstechnischen Aufgaben eingesetzt. Üblicherweise werden dort mit den verschiedenen einwechselbaren Werkzeugen spanende Bearbeitungen von metallischen Werkstoffen, Kunststoffen oder Holz durchgeführt. Für quaderförmige Werkstücke besteht die Möglichkeit, eine der Drehmaschine ähnliche Bearbeitung mit drehender Spindel auszuführen, die durch die Maschinenkinematik getragen mindestens drei zusätzliche translatorische Freiheitsgrade zwischen Werkstück und Werkzeug zulässt. Zu diesem Zweck werden beispielsweise auch Plandrehköpfe eingesetzt. Plandrehköpfe sind rotationsfähige Werkzeuge, die es ermöglichen, eine Schneide radial zur Rotationsachse der Spindel zu verlagern. Verwirklicht wird dies beispielsweise in Bearbeitungszentren mit Sonderkomponenten, wie beispielsweise Spindeln mit zweistufigen Planetengetrieben und zusätzlichem externem Antrieb, der es ermöglicht, bei rotierender Spindel die Antriebswelle für den Planschieber zu verstellen. In gängigen Spindel- und Werkzeugschnittstellen wird zu diesem Zweck eine elektrische Übertragungsschnittstelle mit einem Drehübertrager ohne Beeinträchtigung der Funktionalität der Mechanik integriert, die einen Werkzeugwechsel ermöglicht. Grundsätzlich kann die Übertragungsschnittstelle in Form eines elektrischen Drehübertragers am werkzeugseitigen Ende oder am rückwärtigen Ende der Spindel angeordnet werden. Die Energieübertragung kann dabei durch geeignete Gestaltung von Stator und Rotor berührungslos stattfinden. Ein Nachteil der berührungslosen Energieübertragung besteht in der Begrenzung der elektrischen Leistung. Dies gilt insbesondere für den Fall, dass ein segmentförmiger Stator eingesetzt wird (EP-0 719 199 B1). Bei gängigen Werkzeugdurchmessern ist in einem solchen Fall die übertragbare elektrische Leistung auf ca. 100 Watt begrenzt. Diese Leistung reicht zwar aus, um Werkzeuge mit mechanischen Aktuatoren für die Schneidenverstellung und deren Steuerung und Regelung auch bei den heute gängigen hohen Spindeldrehzahlen in der Größenordnung von 10.000 Umdrehungen pro Minute zu betreiben. Andererseits bedarf die Fertigung von Werkstücken neben der spanenden Bearbeitung weiterer Arbeitsschritte, die bisher in anderen Spezialmaschinen außerhalb des Bearbeitungszentrums durchgeführt werden mussten. Dazu gehören u.a. die Bearbeitungsvorgänge Reinigen, Schweißen, Härten, Beschichten und Beschriften. Neben des großen Zeitaufwandes durch das Umspannen der Werkstücke aus dem Bearbeitungszentrum, das Zwischenlagern und das Positionieren in anderen Sondermaschinen, bedarf es dazu häufig einer Energiezufuhr, die ein Vielfaches derjenigen betragen kann, die für die Werkzeugverstellung im aktorischen Werkzeug des Bearbeitungszentrums notwendig ist.

Ausgehend hiervon liegt der Erfindung die Aufgabe zugrunde, das Bearbeitungszentrum der eingangs angegebenen Art dahingehend zu verbessern, dass damit ein wesentlicher Schritt in Richtung Komplettbearbeitung eines Werkstücks durchgeführt werden kann.

Zur Lösung dieser Aufgabe werden die im Patentanspruch 1 angegebenen Merkmale vorgeschlagen. Vorteilhafte Ausgestaltungen und Weiterbildungen der Erfindung ergeben sich aus den abhängigen Ansprüchen.

Der erfindungsgemäßen Lösung liegt die Erkenntnis zugrunde, dass für eine Komplettbearbeitung eines Werkstücks neben den Werkzeugen für die spanabhebende Bearbeitung Zusatzaggregate erforderlich sind, die in einen Wechselhalter integriert werden können, der mit dem Handhabungssystem eines Bearbeitungszentrums nach Art eines spanabhebenden Werkzeugs in die Aufnahme der Maschinenspindel eingewechselt werden kann. Eine weitere Erkenntnis besteht darin, dass zumindest ein Teil dieser Zusatzaggregate eine elektrische Energiezufuhr erfordern, die um ein Mehrfaches höher ist als diejenige für das spanabhebende Bearbeiten mit aktorischen Werkzeugen. Eine dritte Erkenntnis besteht schließlich darin, dass die Zusatzaggregate mit erheblich niedrigeren Drehzahlen als die spanabhebenden Werkzeuge auskommen. Wenn somit für den Betrieb der aktorischen Schneidwerkzeuge wegen der hohen Arbeitsdrehzahlen eine berührungslose Drehübertragung der elektrischen Energie notwendig ist, kommt bei den niedrigeren Drehzahlen, die für den Einsatz der Zusatzaggregate mit hoher Leistungsanforderung ausreichend sind, eine Drehübertragung mit berührenden Kontakten, beispielsweise mit Schleifkontakten in Betracht. Demgemäß schlägt die Erfindung vor, dass der Drehübertrager mindestens zwei nach Maßgabe der zu übertragenden elektrischen Leistung und der einzustellenden Spindeldrehzahl auswechselbare, in eingekuppeltem Zustand des Maschinenwerkzeugs aktivierbare Übertragungsstrecken für elektrische Energie aufweist, von denen mindestens eine erste Übertragungsstrecke zwischen Stator und Rotor berührungslos ausgebildet ist, während mindestens eine zweite Übertragungsstrecke zwischen Stator und Rotor mit mindestens einem berührenden Kontakt ausgestattet ist. Der berührende Kontakt ist dabei vorzugsweise als Schleifkontakt ausgebildet.

Eine bevorzugte Ausgestaltung der Erfindung sieht vor, dass der maschinengestellfeste Stator jeweils mindestens eine Primärseite der Übertragungsstrecke für die berührungslose und für die berührende Kopplung mit einem mit der Maschinenspindel mitdrehenden Rotor aufweist, und dass die Rotoren einer ersten Untergruppe von Werkzeugen eine Sekundärseite für die berührungslose Kopplung mit der komplementären Primärseite, die Rotoren einer zweiten Untergruppe von Werkzeugen eine Sekundärseite für die berührende Kopplung mit der komplementären Primärseite und/oder die Rotoren einer dritten Untergruppe von Werkzeugen je eine Sekundärseite für die berührungslose und die berührende Kopplung mit den komplementären Primärseiten der zugehörigen Übertragungsstrecken aufweisen.

Vorteilhafterweise weist der Drehübertrager eine berührungslose induktive oder kapazitive Übertragungsstrecke auf, die vorzugsweise durch einen axialen Luftspalt voneinander getrennt sind. Weiter ist es von Vorteil, wenn der Drehübertrager eine galvanische Übertragungsstrecke mit mindestens einem einen radialen oder einen axialen Luftspalt überbrückenden Schleifkontakt aufweist. Der mindestens eine Schleifkontakt ist in seinem Kopplungszustand vorteilhafterweise federunterstützt. Gemäß einer bevorzugten Ausgestaltung der Erfindung ist der mindestens eine Schleifkontakt entgegen seiner bei drehender Maschinenspindel ausgerichteten Fliehkraft federunterstützt, wobei der rotorseitige Schleifkontakt bei Überschreiten einer vorgegebenen Drehzahl von seinem statorseitigen Gegenkontakt abhebt. Grundsätzlich ist es möglich, dass der mindestens eine Schleifkontakt über ein Steuergerät programmgesteuert kuppelbar oder entkuppelbar sind. Die Steuerung kann dabei beispielsweise mit mechanischen oder elektromagnetischen Mitteln oder mittels Druckluft erfolgen.

Eine Besonderheit der Erfindung besteht darin, dass die Drehzahl der Maschinenspindel nach Maßgabe der ausgewählten berührungslosen oder berührenden Energieübertragungsstrecke begrenzt ist.

Eine weitere vorteilhafte Ausgestaltung der Erfindung sieht vor, dass eine erste Untergruppe von Werkzeugen einen Aktuator für die Schneidenverstellung sowie eine Sekundärseite für die berührungslose Übertragungsstrecke aufweist. Vorteilhafterweise ist eine zweite oder dritte Untergruppe von Werkzeugen vorgesehen, die eine Vorrichtung zum Schweißen, Löten, Erhitzen, Härten, Löten, Beschichten, Reinigen und/oder Beschriften eines Werkstücks sowie eine Sekundärseite für eine berührende Übertragungsstrecke aufweist. Die Werkzeuge der zweiten oder dritten Untergruppe weisen zweckmäßig einen Laser, einen Induktor und/oder eine Sprüheinrichtung für ein Abschreckmittel wie Kühlflüssigkeit oder Kühlluft auf. Als Abschreckmittel kann beispielsweise der in einem Bearbeitungszentrum ohnehin verfügbare Kühlschmierstoff verwendet werden.

Eine weitere vorteilhafte Ausgestaltung der Erfindung sieht vor, dass der Drehübertrager eine weitere Übertragungsstrecke für die Datenübertragung aufweist. Die Übertragungsstrecke für die Datenübertragung kann dabei als induktive oder kapazitive berührungslose Kopplungsstrecke, als Funkstrecke oder als optische Übertragungsstrecke ausgebildet sein.

Vorteilhafterweise sind die berührungslose und/oder die berührende Übertragungsstrecke am werkzeugseitigen Ende der Spindel angeordnet. Grundsätzlich ist es auch möglich, die berührende und/oder die berührungslose Übertragungsstrecke des Drehübertragers am rückwärtigen Spindelende anzuordnen, wobei die Sekundärseiten der betreffenden Übertragungsstrecken mit aufnahmeseitigen Endkontakten der Maschinenspindel verbunden sind und das Werkzeug in gekuppeltem Zustand über mitdrehende Kontaktstellen elektrisch an die aufnahmeseitigen Endkontakte angeschlossen ist. Grundsätzlich ist es dabei möglich, dass die Maschinenspindel an ihrem rückwärtigen Ende eine Drehdurchführung für ein Fluid, insbesondere für Kühlschmierstoff aufweist und dass die berührende Übergangsstrecke durch die Drehdurchführung für das Fluid hindurchgeführt ist.

Die Erfindung bezieht sich ferner auf ein Verfahren zum Betrieb eines Bearbeitungszentrums mit einem einen maschinenfesten Stator und einen mit einer Maschinen spindel mitdrehenden Rotor aufweisenden Drehübertrager für elektrische Energie gemäß dem Anspruch 18. Der Drehübertrager weist mindestens eine erste und eine zweite nach Maßgabe der zu übertragenden elektrischen Leistung und der einzustellenden Spindeldrehzahl auswählbare, in eingekuppeltem Zustand des Maschinenwerkzeugs aktivierbare Übertragungsstrecke für elektrische Energie auf, wobei gemäß der Erfindung eine Spindeldrehzahl oder ein Spindeldrehzahlbereich eingestellt wird und in Abhängigkeit der Einstellung der Spindeldrehzahl oder des Spindeldrehzahlbereichs die erste Übertragungsstrecke oder die zweite Übertragungsstrecke oder die erste und die zweite Übertragungsstrecke aktiviert wird. Vorteilhafterweise wird die elektrische Energie über die erste Übertragsstrecke berührungslos und über die zweite Übertragungsstrecke berührend übertragen.

Im Folgenden wird die Erfindung anhand der in der Zeichnung in schematischer Weise dargestellten Ausführungsbeispiele näher erläutert. Es zeigen
- Fig. 1a: und b ein Schema einer zum Stand der Technik gehörenden Maschinenspindel eines Bearbeitungszentrums mit eingespanntem Maschinenwerkzeug und berührungsloser Energieübertragung im werkzeugseitigen Bereich der Maschinenspindel in einer Seitenansicht und einer vergrößerten Darstellung;
- Fig. 2a: und b ein Schema einer weiteren zum Stand der Technik gehörenden Maschinenspindel eines Bearbeitungszentrums mit rückwärtigem berührungslosem Drehübertrager in einer Seitenansicht und in einer vergrößerten Darstellung;
- Fig. 3a: bis c ein Schema einer Maschinenspindel eines Bearbeitungszentrums mit eingespanntem Maschinenwerkzeug und werkzeugseitigem kombinierten Drehübertrager für die berührungslose und die berührende Energieübertragung in einer Seitenansicht und zwei vergrößerten Ausschnittsdarstellungen;
- Fig. 4a: und b ein Schema einer Maschinenspindel eines Bearbeitungszentrums mit eingespanntem Maschinenwerkzeug und gegenüber Fig. 3a bis c abgewandeltem kombiniertem Drehübertrager für die berührungslose und berührende Energieübertragung in einer Seitenansicht und einer vergrößerten Ausschnittsdarstellung;
- Fig. 5a: und b ein Schema einer Maschinenspindel eines Bearbeitungszentrums mit rückwärtigem kombiniertem Drehübertrager für die berührungslose und die berührende Energieübertragung in einer Seitenansicht und einer vergrößerten Ausschnittsdarstellung;
- Fig. 6a: bis c ein Schema einer Maschinenspindel eines Bearbeitungszentrums mit rückwärtigem, gegenüber Fig. 5a und b abgewandeltem kombiniertem Drehübertrager für die berührungslose und die berührende Energieübertragung in einer längsgeschnittenen Darstellung und zwei vergrößerten Ausschnittsdarstellungen;
- Fig. 7a: und b einen Ausschnitt aus einer Maschinenspindel mit eingespanntem Maschinenwerkzeug und einer ansteuerbaren Kontaktstelle mit Schleifring;
- Fig. 8a: und b eine Seitenansicht und eine Draufsicht eines Werkzeugkopfs mit induktiver Härtevorrichtung;
- Fig. 9a: und b eine Seitenansicht und eine Draufsicht eines Messkopfs mit laseroptischem Messsensor.

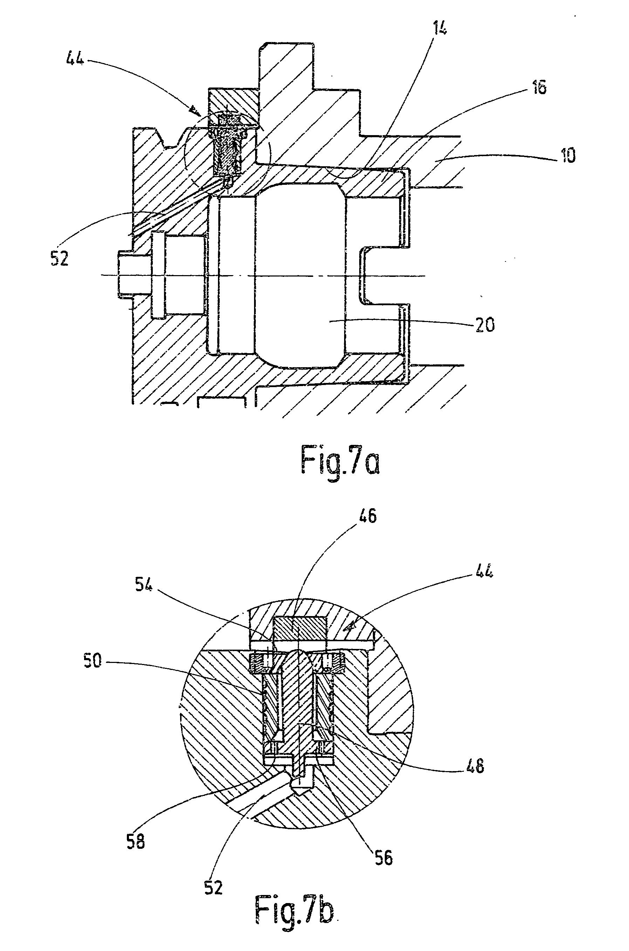

Die in der Zeichnung dargestellten Maschinenspindeln 10 sind Bestandteile eines Bearbeitungszentrums zur Komplettbearbeitung, das zusätzlich ein in der Zeichnung nicht dargestelltes Werkzeugmagazin sowie eine Handhabungsvorrichtung für die Maschinenwerkzeuge aufweist. Die Maschinenspindel 10 ist innerhalb des Bearbeitungszentrums in einem Gestell angeordnet, das in den Zeichnungen schematisch angedeutet und mit dem Bezugszeichen 12 gekennzeichnet ist. An ihrer Stirnseite weist die Maschinenspindel 10 eine Aufnahme 14 auf, die zum Einspannen eines Kupplungselements in Form eines Kupplungsschafts 16 eines aus dem Magazin entnommenen Maschinenwerkzeugs 18 bestimmt ist. Die Einspannung erfolgt über einen maschinenseitig über eine Zugstange betätigbaren Spannmechanismus, der von der Maschinenseite aus in den beispielsweise in Fig. 7a gezeigten Hohlraum 20 des Werkzeugschafts 16 eingreift und das Maschinenwerkzeug 18 unter Herstellung einer Planflächenverspannung und einer Radialverspannung mit der Maschinenspindel 16 kuppelt.

Eine Besonderheit der Erfindung besteht darin, dass das Maschinenwerkzeug 18 einen elektrischen Verbraucher beispielsweise in Form eines Aktuators für die Schneidenverstellung, einer Bearbeitungselektrik für die Oberflächenbearbeitung eines Werkstücks oder einer Messelektronik enthält, der von außen her über einen Drehübertrager 22 mit elektrischem Strom versorgt werden muss. Der Drehübertrager 22 für die elektrische Energie umfasst einen maschinengestellfesten Stator 24 und einen mit der Maschinenspindel mitdrehenden Rotor 26.

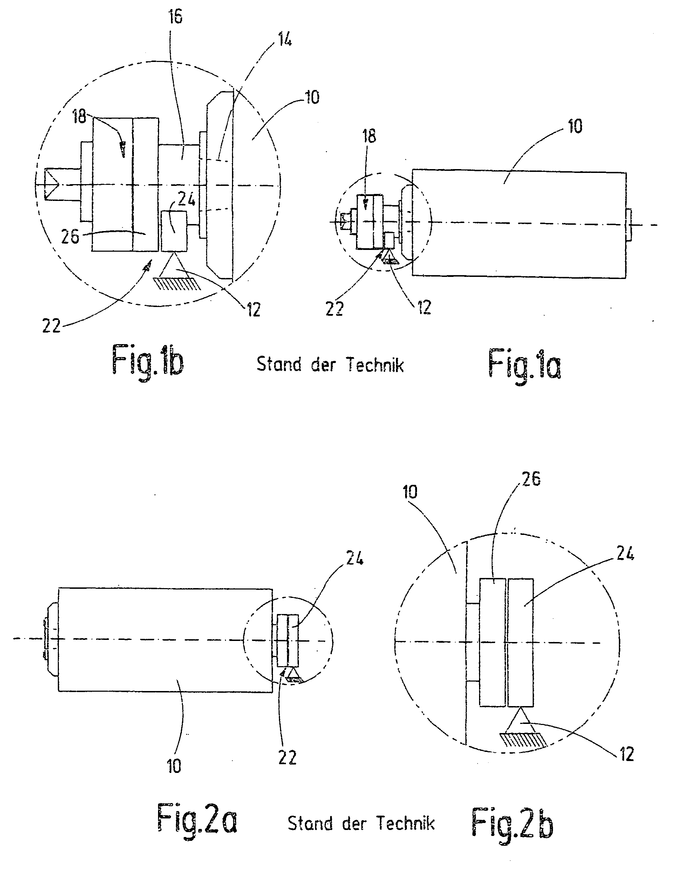

In Fig. 1 a und b ist ein elektrischer Drehübertrager nach dem vorbekannten Stand der Technik dargestellt (EP-0 719 199 B1), bei welchem die elektrische Energie berührungslos von einem maschinengestellfesten, segmentförmigen Stator 24 auf einen mit dem Maschinenwerkzeug 18 verbundenen Rotor 26 übertragen wird. Die für die induktive Energieübertragung notwendigen Primär- und Sekundärspulen sind im Stator bzw. Rotor angeordnet. Der induktive Drehübertrager kann zusätzlich auch zur Übertragung von Daten verwendet werden. Dazu können die Datensignale entweder dem Wechselstrom für die Energieübertragung aufmoduliert oder über zusätzliche Datenwicklungen auf einer getrennten Datenstrecke übertragen werden.

Eine weitere aus dem vorbekannten Stand der Technik bekannte Anordnung ist in Fig. 2a und b gezeigt. Dort befindet sich der Drehübertrager für die berührungslose Energieübertragung am rückwärtigen Ende der Maschinenspindel 10 in Form eines umlaufenden Rotors 26 und eines gestellfest angeordneten Stators 24. Die vom Rotor aus zum Maschinenwerkzeug zu übertragende elektrische Energie wird dort über elektrische Leiter durch die Maschinenspindel 10 hindurchgeleitet und an einer mitdrehenden elektrischen Kontaktstelle 44 in das Maschinenwerkzeug 18 eingekoppelt (vgl. Fig. 7a und b).

Die berührungslose Energieübertragung erfolgt vor allem für die Betätigung von aktorischen Werkzeugen bei der spanenden Bearbeitung. Dort ist beispielsweise ein Aktuator für die Schneidenverstellung vorgesehen, dessen Leistungsaufnahme in der Größenordnung von 50 Watt liegt. Wenn zusätzlich noch eine ultraschallunterstützte spanabhebende Bearbeitung vorgesehen ist, ergibt sich eine Leistungsaufnahme in der Größenordnung von 70 bis 100 Watt. Über diese Größenordnung hinaus ist eine berührungslose Energieübertragung bei den üblichen Werkzeuggrößen nur mit einem erheblichen Mehraufwand möglich. Bei der Bearbeitung von Werkstücken gibt es jedoch Anwendungen, deren Anforderung an die elektrische Leistung sehr viel höher ist. Dazu gehören u.a. Bearbeitungsvorgänge, die eine Aufheizung des Werkstücks oder von zusätzlichen Medien auf höhere Temperaturen erfordern, und die bisher nicht in Bearbeitungszentren durchgeführt werden konnten, wie zum Beispiel das Reinigen, Schweißen, Löten, Härten, Beschichten und Beschriften eines Werkstücks, wozu eine elektrische Leistung in der Größenordnung von einigen hundert Kilowatt notwendig ist. Ein weiterer Vorgang, der eine erhöhte elektrische Energie erfordert, besteht in der Speicherung elektrischer oder mechanischer Energie im Maschinenwerkzeug, die während des Betriebs des Werkzeugs zu einem späteren Zeitpunkt programmgesteuert entladen werden kann. Auch hier wird der Ladevorgang zweckmäßig über eine berührende Übertragungsstrecke vorgenommen.

Eine Besonderheit der vorliegenden Erfindung besteht nun darin, einen Drehübertrager zu entwickeln, der bei Bedarf auch höhere elektrische Leistungen zu übertragen vermag. Da die höhere elektrische Leistung zumeist mit einer niedrigeren erforderlichen Drehzahl der Maschinenspindel verknüpft ist, besteht ein wesentlicher Gedanke für die vorliegende Erfindung darin, dass neben der beschriebenen berührungslosen Übertragungsstrecke für die Energieübertragung eine berührende, also kontaktbildende Übertragungsstrecke vorgesehen ist, die zwar nur relativ kleine Drehzahlen der Maschinenspindel bis zu einer Größenordnung von 1000 Umdrehungen pro Minute erlaubt, die aber für die Übertragung von sehr viel höheren elektrischen Leistungen geeignet ist.

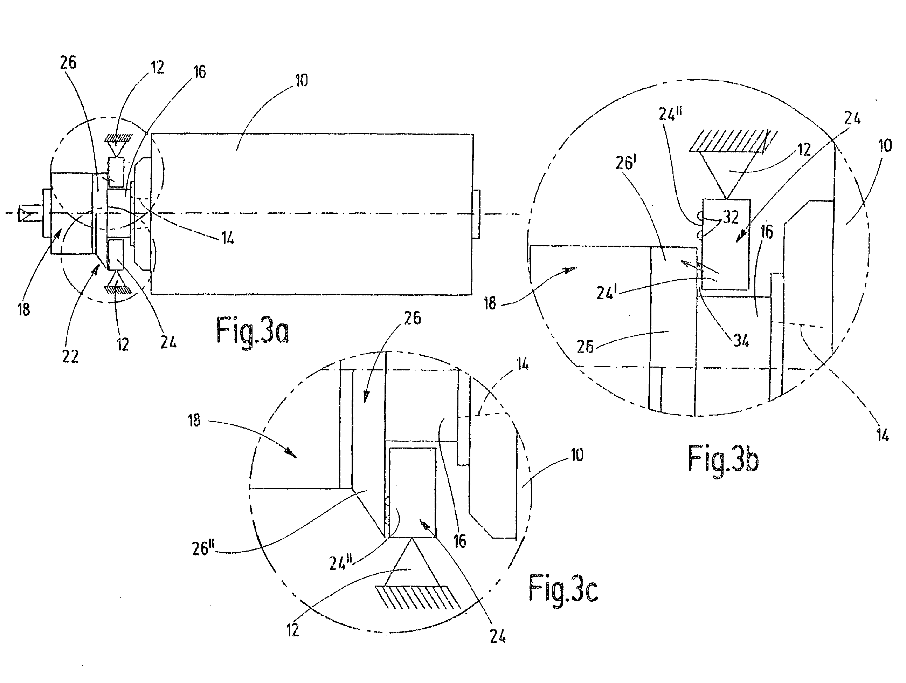

Bei dem in Fig. 3a bis c gezeigten Ausführungsbeispiel ist auf der Werkzeugseite der Maschinenspindel 10 ein gestellfester Stator 24 vorgesehen, der in seinem radial inneren Bereich die Primärseite 24' einer berührungslosen Übertragungsstrecke und in seinem radial äußeren Bereich die Primärseite 24" einer berührenden Übertragungsstrecke mit Kontaktelementen 32 aufweist. Je nach Anforderung an die elektrische Leistung ist das Maschinenwerkzeug 18 mit einem Rotor 26 ausgestattet, dessen Sekundärseite 26' nur die innere Primärseite 24' für die berührungslose Energieübertragung überlappt (Fig. 3b), oder dessen Sekundärseite 26" auch die die Schleifkontakte 32 aufweisenden äußere Primärseite 24" des Stators 24 überlappt (Fig. 3c). Im ersteren Falle gemäß Fig. 3b kann die Maschinenspindel 10 mit größeren Drehzahlen angetrieben werden, jedoch mit geringerer Leistungsübertragung, während im letzteren Falle die Spindeldrehzahlen automatisch herabgesetzt werden, jedoch bei größerer übertragbarer elektrischer Leistung. Die Begrenzung der Drehzahlen und die Begrenzung der elektrischen Leistung erfolgen programmgesteuert nach Maßgabe des über den Werkzeugwechsler des Bearbeitungszentrums ausgewählten Maschinenwerkzeugs.

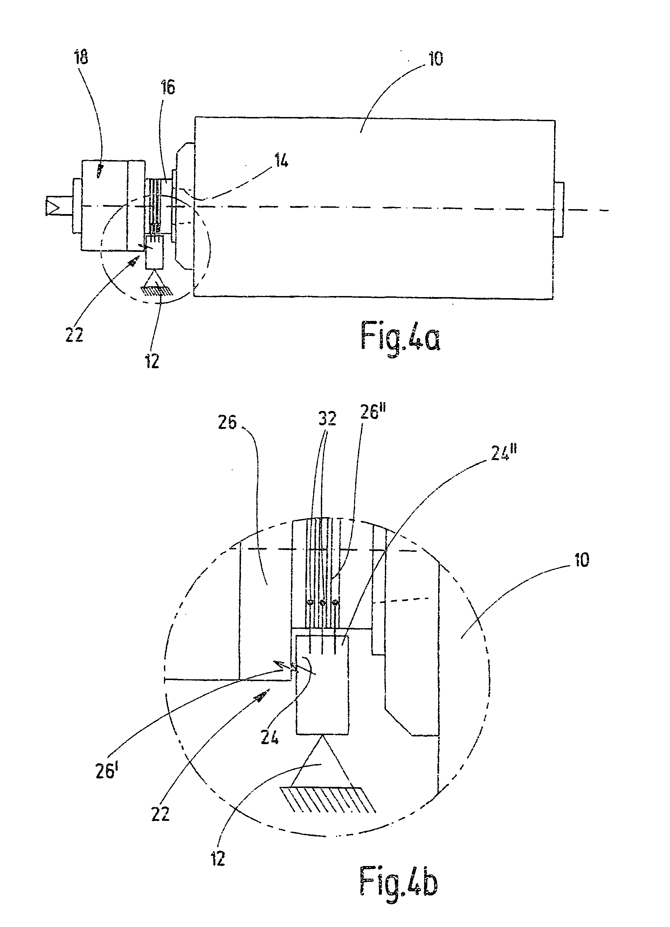

Das Ausführungsbeispiel nach Fig. 4a und b unterscheidet sich von dem Ausführungsbeispiel nach Fig. 3a bis c dadurch, dass die berührende elektrische Übertragungsstrecke radial und nicht axial ausgerichtet ist. Der Stator 24 weist im Falle von Fig. 4a und b elektrische Schleifkontakte 32 auf, die erst nach dem Einwechseln des Maschinenwerkzeugs 18 radial in ihre in Fig. 4b gezeigte Arbeitsposition eingefahren werden können. Auch dort ist neben der berührenden Übertragungsstrecke 24" unter Verwendung der Schleifkontakte 32 eine berührungslose, vorzugsweise induktive Übertragungsstrecke vorgesehen, die ebenso wie im Falle der Fig. 3a bis c gleichzeitig mit der berührenden Übertragungsstrecke betrieben werden kann. Bei diesem Ausführungsbeispiel sorgt die Maschinensteuerung dafür, dass bei hohen Spindeldrehzahlen die Schleifkontakte 32 ausgekoppelt werden. Dadurch wird ein unnötiger Verschleiß oder gar eine Zerstörung der Schleifkontakte 32 vermieden.

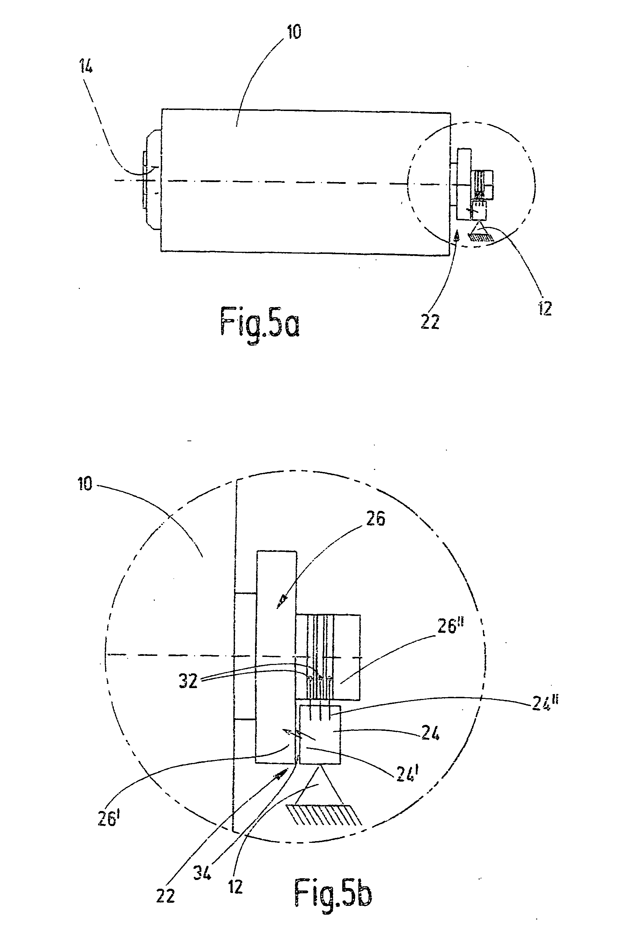

Das Ausführungsbeispiel nach Fig. 5a und b unterscheidet sich von dem Ausführungsbeispiel nach Fig. 4a und b dadurch, dass sich der kombinierte Drehübertrager 22 mit seinen berührungslosen und berührenden Übertragungsstrecken am rückwärtigen Ende der Maschinenspindel 10 befindet. Der Rotor 26 ist dort drehfest mit der Maschinenspindel 10 verbunden, während der kombinierte Stator 24 mit dem Gestell 12 verbunden ist. Die Ausbildung der berührungslosen und berührenden Übertragungsstrecken entspricht dem Ausführungsbeispiel nach Fig. 4a und b.

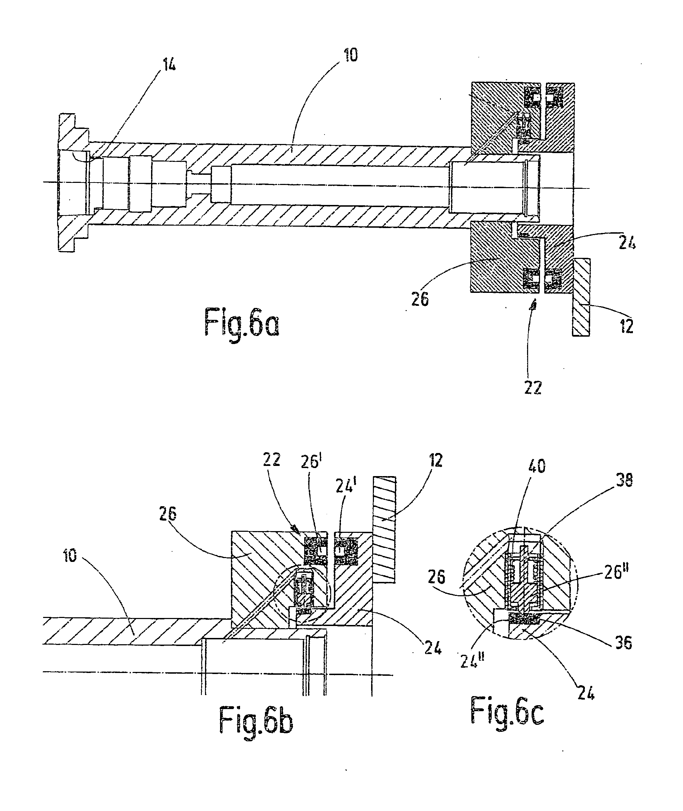

Eine hiervon abgewandelte Ausgestaltung eines kombinierten Drehübertragers ist in den Fig. 6a bis c dargestellt. Auch dort ist der Stator 24 starr mit dem Gestell 12 verbunden, während der umlaufende Rotor 26 am rückwärtigen Ende der Maschinenspindel 10 angeordnet ist. Für die berührungslose Übertragungsstrecke sind die Primärseite 24' des Stators 24 und die Sekundärseite 26' des Rotors 26 über einen axialen Luftspalt 34 voneinander getrennt. Die berührende Übertragungsstrecke weist auf der Primärseite 24" einen umlaufenden Kontaktring 36 auf, während die Rotorseite 26" einen im Rotor 26 angeordneten Kontaktstift 38 aufweist, der unter der Einwirkung einer Druckfeder 40 radial gegen den primärseitigen Kontaktring 36 gedrückt wird. Der Kontaktstift 40 steht bei rotierender Maschinenspindel 10 unter der Einwirkung der Fliehkraft, die dafür sorgt, dass bei Erreichen einer definierten Drehzahl der Kontaktstift 38 entgegen der Einwirkung der Druckfeder 40 vom Kontaktring 36 abgehoben wird und die Stromübertragung unterbrochen wird. Dadurch wird sichergestellt, dass die Schleifkontakte bei überhöhten Maschinendrehzahlen nicht unzulässig verschlissen werden.

Eine Besonderheit der Ausführungsvarianten nach Fig. 5a und b sowie 6a und b besteht darin, dass zusätzlich zu dem Drehübertrager 22 am rückwärtigen Ende der Maschinenspindel 10 an deren Stirnseite ein elektrischer eingewechselter Kontakt zum Maschinenwerkzeug hergestellt werden muss. Zu diesem Zweck dient die in Fig. 7a und b gezeigte, mit der Maschinenspindel 10 mitdrehende Kontaktstelle 44, die eine drehfest mit der Maschinenspindel 10 verbundene und an die rückwärtigen Sekundärseiten des Drehübertragers 22 angeschlossene Kontaktfläche 46 sowie einen am Werkzeugschaft 16 angeordneten, radial zu diesem verschiebbaren Kontaktstift 48 aufweist. Um den Werkzeugschaft 16 in die Werkzeugaufnahme 14 einführen zu können, befindet sich der Kontaktstift 48 zunächst in seiner in Fig. 7a und b gezeigten, zurückgezogenen Stellung. Zur Herstellung des elektrischen Kontakts wird der Kontaktstift 48 entweder bei drehender Spindel 10 unter der Einwirkung der Fliehkraft oder unter der Einwirkung eines über die Leitung 52 zugeführten Druckmittels entgegen der Kraft der Rückstellfeder 50 in Richtung Kontaktfläche 46 verschoben. Im stirnseitigen Bereich greift der Kontaktstift 48 durch eine Gummidichtung 54 hindurch, die dafür sorgt, dass in das Innere der Stiftführung kein Schmutz von außen eindringen kann. Zusätzlich sind in einem rückwärtigen, kolbenartigen Bereich 56 des Kontaktstifts 48 Öffnungen 58 vorgesehen, über die Sperrluft zur Reinigung der Kontaktstelle eingepresst werden kann. Die Zustellung des Kontaktstifts kann grundsätzlich auch auf elektrischem, elektromagnetischem oder mechanischem Wege erfolgen, wobei die hierfür vorgesehenen Antriebsmittel programmgesteuert betätigt werden können.

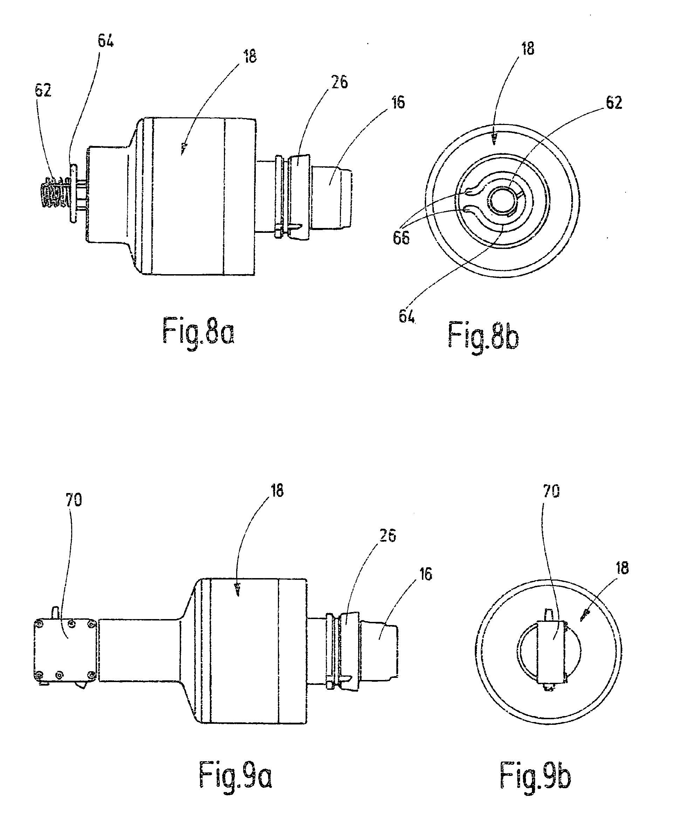

Die Fig. 8a und b zeigen eine Seitenansicht und eine Draufsicht eines Maschinenwerkzeugs 18, das mit einer induktiven Härtevorrichtung ausgestattet ist. Die Härtung bestimmter Werkstückteile bildet einen Fertigungsschritt auf dem Weg einer Komplettbearbeitung. Zu diesem Zweck weist das in Fig. 8a und b gezeigte Werkzeug 18 eine Induktionsspule 62 sowie eine Fluidleitung 64 mit Sprühdüsen 66 für ein Abschreckmittel auf. Die Induktionsspule 62, die für die partielle Aufheizung des zu härtenden Teils eines Werkstücks bestimmt ist, hat je nach ihrer Größe eine Leistungsanforderung in der Größenordnung von einigen hundert Watt. Außerdem ist in der Fluidleitung ein nicht dargestelltes elektrisch oder elektromagnetisch ansteuerbares Ventil angeordnet, das ebenfalls mit elektrischem Strom versorgt werden muss. Die Leistungsanforderung ist dort so hoch, dass eine berührungslose Stromübertragung nicht ausreichen würde.

Das Maschinenwerkzeug 18 nach Fig. 9a und b ist mit einer Laseroptik 70 zur Ausmessung des bearbeiteten Werkstücks oder zu dessen lokaler Aufheizung oder Beschriftung ausgestattet. Auch hierfür ist je nach Leistungsanforderung eine galvanische Stromübertragung über den Drehübertrager 22 erforderlich.

Zusammenfassend ist folgendes festzuhalten: Die Erfindung bezieht sich auf ein Bearbeitungszentrum für die Werkstückbearbeitung. Das Bearbeitungszentrum weist ein Maschinengestell 12, eine am Maschinengestell 12 drehbar angeordnete, motorisch angetriebene Maschinenspindel 10 sowie eine Gruppe von an der Maschinenspindel einwechselbaren Maschinenwerkzeugen 18 auf. Die Maschinenwerkzeuge weisen ihrerseits einen mit einer Aufnahme 14 der Maschinenspindel 10 kompatiblen Kupplungsschaft 16 auf. Weiter ist ein Drehübertrager 22 für elektrische Energie vorgesehen, der einen maschinenfesten Stator 24 und einen mit der Maschinenspindel 10 mitdrehenden Rotor 26 aufweist. Als neu wird beansprucht, dass der Drehübertrager 22 mindestens zwei nach Maßgabe der zu übertragenden elektrischen Leistung und der einzustellenden Spindeldrehzahl auswählbare, in eingekuppeltem Zustand des Maschinenwerkzeugs 18 aktivierbare Übertragungsstrecken für elektrische Energie aufweist, von denen mindestens eine erste Übertragungsstrecke zwischen Stator 24 und Rotor 26 berührungslos ausgebildet ist, während mindestens eine zweite Übertragungsstrecke zwischen Stator und Rotor mit berührenden Kontakten ausgestattet ist. Mit diesen Maßnahmen soll erreicht werden, dass eine Komplettbearbeitung der Werkstücke bei einer Einspannung im Bearbeitungszentrum möglich ist.

## Patentansprüche

1. Bearbeitungszentrum mit einem Maschinengestell (12), mit einer am Maschinengestell drehbar angeordneten, motorisch angetriebenen Maschinenspindel (10), mit einer Gruppe von an der Maschinenspindel einwechselbaren Maschinenwerkzeugen (18), die ein mit einer Aufnahme der Maschinenspindel kompatibles Kupplungselement (16) aufweisen, und mit einem Drehübertrager (22) für elektrische Energie, der einen maschinengestellfesten Stator (24) und einen mit der Maschinenspindel (10) mitdrehenden Rotor aufweist, **dadurch gekennzeichnet, dass** der Drehübertrager (22) mindestens zwei nach Maßgabe der zu übertragenden elektrischen Leistung und der einzustellenden Spindeldrehzahl auswählbare, in eingekuppeltem Zustand des Maschinenwerkzeugs (18) aktivierbare Übertragungsstrecken für elektrische Energie aufweist, von denen mindestens eine erste Übertragungsstrecke zwischen Stator (24) und Rotor (26) berührungslos ausgebildet ist, während mindestens eine zweite Übertragungsstrecke zwischen Stator und Rotor mit mindestens einem berührenden Kontakt ausgestattet ist.

2. Bearbeitungszentrum nach Anspruch 1, **dadurch gekennzeichnet, dass** der maschinengestellfeste Stator (24) jeweils mindestens eine Primärseite (24',24") der Übertragungsstrecken für die berührungslose und für die berührende Kopplung mit einem mitdrehenden Rotor (26) aufweist, und dass die Rotoren einer ersten Untergruppe von Maschinenwerkzeugen (18) eine Sekundärseite (26') für die berührungslose Kopplung mit der komplementären Primärseite (24'), die Rotoren einer zweiten Untergruppe von Maschinenwerkzeugen (18) eine Sekundärseite (26") für die berührende Kopplung mit der komplementären Primärseite (24") und/oder die Rotoren einer dritten Untergruppe von Maschinenwerkzeugen (18) je eine Sekundärseite (26',26") für die berührungslose und für die berührende Kopplung mit den komplementären Primärseiten (24',24") der zugehörigen Übertragungsstrecken aufweisen.

3. Bearbeitungszentrum nach Anspruch 1 oder 2, **dadurch gekennzeichnet, dass** der Drehübertrager eine berührungslose induktive oder kapazitive Übertragungsstrecke aufweist.

4. Bearbeitungszentrum nach Anspruch 3, **dadurch gekennzeichnet, dass** die Primär- und Sekundärseiten der berührungslosen Übertragungsstrecken durch einen axialen Luftspalt (34) voneinander getrennt sind.

5. Bearbeitungszentrum nach einem der Ansprüche 1 bis 4, **dadurch gekennzeichnet, dass** der Drehübertrager (22) eine galvanische Übertragungsstrecke mit mindestens einem einen radialen oder axialen Luftspalt überbrückenden Schleifkontakt aufweist.

6. Bearbeitungszentrum nach Anspruch 5, **dadurch gekennzeichnet, dass** der mindestens eine Schleifkontakt (38) im Kopplungszustand federunterstützt ist.

7. Bearbeitungszentrum nach Anspruch 5 oder 6, **dadurch gekennzeichnet, dass** der mindestens eine Schleifkontakt (38) entgegen seiner bei drehender Spindel ausgerichteten Fliehkraft federunterstützt sind, und dass der mindestens eine Schleifkontakt (38) bei Überschreiten einer vorgegebenen Drehzahl von seinem Gegenkontakt abhebt.

8. Bearbeitungszentrum nach einem der Ansprüche 1 bis 7, **dadurch gekennzeichnet, dass** der mindestens eine Schleifkontakt (38) programmgesteuert kuppelbar und/oder entkuppelbar ist.

9. Bearbeitungszentrum nach einem der Ansprüche 1 bis 8, **dadurch gekennzeichnet, dass** die Drehzahl der Maschinenspindel (10) nach Maßgabe der ausgewählten berührungslosen oder berührenden Energieübertragungsstrecke begrenzt ist.

10. Bearbeitungszentrum nach einem der Ansprüche 1 bis 9, **dadurch gekennzeichnet, dass** eine erste Untergruppe von Maschinenwerkzeugen einen Aktuator für die Schneidenverstellung aufweist, der über eine berührungslose Übertragungsstrecke mit elektrischem Strom beaufschlagbar ist.

11. Bearbeitungszentrum nach einem der Ansprüche 1 bis 10, **dadurch gekennzeichnet, dass** eine zweite Untergruppe von Maschinenwerkzeugen eine Vorrichtung zum Schweißen, Löten, Erhitzen, Härten, Beschichten oder Beschriften eines Werkstücks aufweist, die über eine berührende Übertragungsstrecke mit elektrischem Strom beaufschlagbar ist.

12. Bearbeitungszentrum nach Anspruch 11, **dadurch gekennzeichnet, dass** die Maschinenwerkzeuge der zweiten Untergruppe einen Laser, einen Induktor und/oder ein elektrisch ansteuerbares Sprühaggregat für ein Abschreckfluid aufweisen.

13. Bearbeitungszentrum nach einem der Ansprüche 1 bis 12, **dadurch gekennzeichnet, dass** eine dritte Untergruppe von Maschinenwerkzeugen mechanische oder elektrische Speichermittel aufweist, die über eine berührende Übertragungsstrecke mit elektrischem Strom beaufschlagbar und dabei aufladbar sind und die programmgesteuert unter Ausführung eines Bearbeitungsvorgangs entladbar sind.

14. Bearbeitungszentrum nach einem der Ansprüche 1 bis 13, **dadurch gekennzeichnet, dass** der Drehübertrager (22) eine weitere Übertragungsstrecke für die Datenübertragung aufweist.

15. Bearbeitungszentrum nach Anspruch 14, **dadurch gekennzeichnet, dass** die Übertragungsstrecke für die Datenübertragung als induktive oder kapazitive Kopplungsstrecke, als Funkstrecke oder als optische Übertragungsstrecke ausgebildet ist.

16. Bearbeitungszentrum nach einem der Ansprüche 1 bis 15, **dadurch gekennzeichnet, dass** die berührende und/oder berührungslose Übertragungsstrecke des Drehübertragers (22) am rückwärtigen Spindelende angeordnet ist, und dass das Maschinenwerkzeug (18) in gekuppeltem Zustand über eine mitdrehende Kontaktstelle (44) an die Übertragungsstrecke angeschlossen ist.

17. Bearbeitungszentrum nach Anspruch 16, **dadurch gekennzeichnet, dass** die Maschinenspindel an ihrem rückwärtigen Ende eine Drehdurchführung für ein Fluid, insbesondere für Kühlschmierstoff aufweist, und dass mindestens eine der rückwärtigen Übertragungsstrecken durch die Drehdurchführung für das Fluid hindurchgeführt ist.

18. Verfahren zum Betrieb eines Bearbeitungszentrums mit einem einen maschinenfesten Stator (24) und einen mit einer Maschinenspindel (10) mitdrehenden Rotor (26) aufweisenden Drehübertrager (22) für elektrische Energie, der mindestens eine erste und eine zweite nach Maßgabe der zu übertragenden elektrischen Leistung und der einzustellenden Spindeldrehzahl auswählbare, in eingekuppeltem Zustand eines Maschinenwerkzeugs (18) aktivierbare Übertragungsstrecke für elektrische Energie aufweist, bei welchem eine Spindeldrehzahl oder ein Spindeldrehzahlbereich eingestellt wird und in Abhängigkeit der Einstellung von Spindeldrehzahl oder Spindeldrehzahlbereich die erste Übertragungsstrecke oder die zweite Übertragungsstrecke oder die erste und die zweite Übertragungsstrecke aktiviert wird, wobei die elektrische Energie über die erste Übertragungsstrecke berührungslos und über die zweite Übertragungsstrecke berührend übertragen wird.

## Claims

1. A machining center having a machine frame (12), having a motor-driven machine spindle (10) which is arranged in a rotatable manner on the machine frame, having a group of machine tools (18) which can be replaced on the machine spindle and which have a coupling element (16) which is compatible with a receptacle of the machine spindle, and having a rotary transmitter (22) for electrical energy, which rotary transmitter has a stator (24), which is fixed to the machine frame, and a rotor which rotates together with the machine spindle (10), **characterized in that** the rotary transmitter (22) has at least two transmission paths for electrical energy which can be selected in accordance with the electrical power to be transmitted and the spindle rotation speed to be set and can be activated when the machine tool (18) is in the coupled-in state, of which at least a first transmission path between the stator (24) and the rotor (26) is formed in a contact-free fashion, while at least a second transmission path between the stator and the rotor is equipped with at least one contacting contact.

2. The machining center as claimed in claim 1, **characterized in that** the stator (24) which is fixed to the machine frame has in each case at least one primary side (24', 24") of the transmission paths for contact-free and for contacting coupling to a co-rotating rotor (26), and **in that** the rotors of a first subgroup of machine tools (18) have a secondary side (26') for contact-free coupling to the complementary primary side (24'), the rotors of a second subgroup of machine tools (18) have a secondary side (26") for contacting coupling to the complementary primary side (24") and/or the rotors of a third subgroup of machine tools (18) have a respective secondary side (26', 26") for contact-free and for contacting coupling to the complementary primary sides (24', 24") of the associated transmission paths.

3. The machining center as claimed in claim 1 or 2, **characterized in that** the rotary transmitter has a contact-free inductive or capacitive transmission path.

4. The machining center as claimed in claim 3, **characterized in that** the primary and secondary sides of the contact-free transmission paths are separated from one another by an axial air gap (34).

5. The machining center as claimed in one of claims 1 to 4, **characterized in that** the rotary transmitter (22) has an electrically conductive transmission path with at least one wiping contact which bridges a radial or axial air gap.

6. The machining center as claimed in claim 5, **characterized in that** the at least one wiping contact (38) is supported by a spring in the coupling state.

7. The machining center as claimed in claim 5 or 6, **characterized in that** the at least one wiping contact (38) is supported by a spring against its centrifugal force which is established when the spindle is rotating, and **in that** the at least one wiping contact (38) lifts off from its mating contact when a predefined rotation speed is exceeded.

8. The machining center as claimed in one of claims 1 to 7, **characterized in that** the at least one wiping contact (38) can be coupled and/or decoupled in a program-controlled fashion.

9. The machining center as claimed in one of claims 1 to 8, **characterized in that** the rotation speed of the machine spindle (10) is limited in accordance with the selected contact-free or contacting energy transmission path.

10. The machining center as claimed in one of claims 1 to 9, **characterized in that** a first subgroup of machine tools has an actuator for blade adjustment, it being possible for electric current to be applied to said actuator via a contact-free transmission path.

11. The machining center as claimed in one of claims 1 to 10, **characterized in that** a second subgroup of machine tools has an apparatus for welding, soldering, heating, hardening, coating or labeling a workpiece, it being possible for electric current to be applied to said apparatus via a contacting transmission path.

12. The machining center as claimed in claim 11, **characterized in that** the machine tools of the second subgroup have a laser, an inductor and/or an electrically operable spray assembly for a quenching fluid.

13. The machining center as claimed in one of claims 1 to 12, **characterized in that** a third subgroup of machine tools has mechanical or electrical storage means, it being possible for electric current to be applied to said storage means via a contacting transmission path and for said storage means to be charged in the process and for said storage means to be discharged in a program-controlled manner by executing a machining process.

14. The machining center as claimed in one of claims 1 to 13, **characterized in that** the rotary transmitter (22) has a further transmission path for data transmission.

15. The machining center as claimed in claim 14, **characterized in that** the transmission path for data transmission is in the form of an inductive or capacitive coupling path, a radio transmission path or an optical transmission path.

16. The machining center as claimed in one of claims 1 to 15, **characterized in that** the contacting and/or contact-free transmission paths or path of the rotary transmitter (22) are/is arranged at the rear spindle end, and **in that** the machine tool (18) is connected to the transmission path via a co-rotating contact point (44) in the coupled state.

17. The machining center as claimed in claim 16, **characterized in that** the machine spindle has, at its rear end, a rotary passage for a fluid, in particular for cooling lubricant, and **in that** at least one of the rear transmission paths is routed through the rotary passage for the fluid.

18. A method for operating a machining center having a rotary transmitter for electrical energy, which rotary transmitter has a stator (24), which is fixed to the machine frame, and a rotor (26), which rotates together with a machine
spindle (10), and which has at least a first and a second transmission path for electrical energy, which transmission paths can be selected in accordance with the electrical power to be transmitted and the spindle rotation speed to be set and can be activated when a machine tool (18) is in the coupled-in state, in which method a spindle rotation speed or a spindle rotation speed range is set and the first transmission path or the second transmission path or the first and the second transmission paths is/are activated as a function of the spindle rotation speed or spindle rotation speed range setting, wherein the electrical energy is transmitted in a contact-free fashion via the first transmission path and in a contacting fashion via the second transmission path.

## Revendications

1. Centre d'usinage avec un bâti de machine (12), avec une broche de machine (10) montée tournante sur le bâti de machine, entraînée par un moteur, avec un groupe d'outils de machine (18) échangeables sur la broche de machine, qui présentent un élément d'accouplement (16) compatible avec un raccord de la broche de machine, et avec un transmetteur rotatif (22) d'énergie électrique qui présente un stator (24) solidaire du bâti de machine et un rotor qui tourne avec la broche de machine (10), **caractérisé en ce que** le transmetteur rotatif (22) présente au moins deux voies de transmission d'énergie électrique activables à l'état accouplé de l'outil de machine (18), sélectionnables en fonction de la puissance électrique à transmettre et de la vitesse de rotation de broche à régler, dont au moins une première voie de transmission entre stator (24) et rotor (26) est réalisée sans contact, tandis qu'au moins une deuxième voie de transmission entre stator et rotor est équipée d'au moins un accouplement avec contact.

2. Centre d'usinage selon la revendication 1, **caractérisé en ce que** le stator (24) solidaire du bâti de machine présente chaque fois au moins un côté primaire (24', 24") des voies de transmission pour l'accouplement sans contact et pour l'accouplement avec contact avec un rotor (26) entraîné en rotation, et que les rotors d'un premier sous-groupe d'outils de machine (18) présentent un côté secondaire (26') pour l'accouplement sans contact avec le côté primaire complémentaire (24'), les rotors d'un deuxième sous-groupe d'outils de machine (18) un côté secondaire (26") pour l'accouplement avec contact avec le côté primaire complémentaire (24") et/ou les rotors d'un troisième sous-groupe d'outils de machine (18) un côté secondaire (26') pour l'accouplement sans contact et un côté secondaire (26") pour l'accouplement avec contact avec les côtés primaires complémentaires (24', 24") des voies de transmission associées.

3. Centre d'usinage selon la revendication 1 ou 2, **caractérisé en ce que** le transmetteur rotatif présente une voie de transmission sans contact inductive ou capacitive.

4. Centre d'usinage selon la revendication 3, **caractérisé en ce que** les côtés primaire et secondaire des voies de transmission sans contact sont séparés l'un de l'autre par un entrefer axial (34).

5. Centre d'usinage selon une des revendications 1 à 4, **caractérisé en ce que** le transmetteur rotatif (22) présente une voie de transmission galvanique avec au moins un contact frottant qui compense un entrefer radial ou axial.

6. Centre d'usinage selon la revendication 5, **caractérisé en ce que** ledit au moins un contact frottant (38) est assisté par ressort à l'état accouplé.

7. Centre d'usinage selon la revendication 5 ou 6, **caractérisé en ce que** ledit au moins un contact frottant (38) est assisté par ressort à l'encontre de sa force centrifuge orientée vers l'extérieur lorsque la broche est en rotation, et que ledit au moins un contact frottant (38) se décolle de son contact complémentaire en cas de dépassement d'une vitesse de rotation prédéfinie.

8. Centre d'usinage selon une des revendications 1 à 7, **caractérisé en ce que** ledit au moins un contact frottant (38) peut être accouplé ou désaccouplé de manière programmée.

9. Centre d'usinage selon une des revendications 1 à 8, **caractérisé en ce que** la vitesse de rotation de la broche de machine (10) est limitée en fonction de la voie de transmission d'énergie sans contact ou avec contact sélectionnée.

10. Centre d'usinage selon une des revendications 1 à 9, **caractérisé en ce qu'**un premier sous-groupe d'outils de machine comprend un actionneur pour le réglage de l'arête de coupe, qui peut être alimenté en courant électrique par une voie de transmission sans contact.

11. Centre d'usinage selon une des revendications 1 à 10, **caractérisé en ce qu'**un deuxième sous-groupe d'outils de machine comprend un dispositif pour souder, braser, chauffer, tremper, revêtir ou marquer une pièce, qui peut être alimenté en courant électrique par une voie de transmission avec contact.

12. Centre d'usinage selon la revendication 11, **caractérisé en ce que** les outils de machine du deuxième sous-groupe comprennent un laser, un inducteur et/ou un groupe de pulvérisation à commande électrique pour un fluide de trempe.

13. Centre d'usinage selon une des revendications 1 à 12, **caractérisé en ce qu'**un troisième sous-groupe d'outils de machine comprend des moyens de stockage mécaniques ou électriques qui peuvent être alimentés en courant électrique par une voie de transmission avec contact et chargés ce faisant, et qui peuvent être déchargés de manière programmée en exécutant une opération d'usinage.

14. Centre d'usinage selon une des revendications 1 à 13, **caractérisé en ce que** le transmetteur rotatif (22) présente une voie de transmission supplémentaire pour la transmission de données.

15. Centre d'usinage selon la revendication 14, **caractérisé en ce que** la voie de transmission pour la transmission de données est réalisée sous la forme d'une voie de couplage inductive ou capacitive, d'une liaison radio ou d'une voie de transmission optique.

16. Centre d'usinage selon une des revendications 1 à 15, **caractérisé en ce que** la voie de transmission avec contact et/ou sans contact du transmetteur rotatif (22) est disposée à l'extrémité arrière de la broche, et que l'outil de machine (18) à l'état accouplé est raccordé à la voie de transmission par une zone de contact (44) entraînée en rotation.

17. Centre d'usinage selon la revendication 16, **caractérisé en ce que** la broche de machine présente à son extrémité arrière une traversée rotative pour un fluide, en particulier pour un lubrifiant de refroidissement, et qu'au moins une des voies de transmission arrière passe à travers la traversée rotative pour le fluide.

18. Procédé de fonctionnement d'un centre d'usinage avec un transmetteur rotatif (22) d'énergie électrique qui présente un stator (24) solidaire de la machine et un rotor (26) qui tourne avec la broche de machine (10), qui présente au moins une première et une deuxième voies de transmission d'énergie électrique activables à l'état accouplé de l'outil de machine (18), sélectionnables en fonction de la puissance électrique à transmettre et de la vitesse de rotation de broche à régler, dans lequel procédé une vitesse de rotation de broche ou une plage de vitesse de rotation de broche est réglée et, en fonction du réglage de la vitesse de rotation de broche ou de la plage de vitesse de rotation de broche, la première voie de transmission ou la deuxième voie de transmission ou la première et la deuxième voies de transmission sont activées, l'énergie électrique étant transmise sans contact par la première voie de transmission et avec contact par la deuxième voie de transmission.
